# EUROPEAN PATENT APPLICATION

(11) **EP 2 527 665 A2**
(43) Date of publication of application: **28.11.2012**
(21) Application number: 12165194.7
(22) Date of filing: 23.04.2012
(51) Int. Cl.: F16B 12/20, F24C 3/00

(54) **Position adjusting device for gas cooker main gas pipe and gas cooker**

(30) Priority: 29.04.2011 CN 201110109962
(71) Applicant: BSH Bosch und Siemens Hausgeräte GmbH, 81739 München (DE)
(72) Inventor: Redondo Moritz, Jose, 39610 Guarnizo-El Astillero (ES)

(57) **Abstract**

A position adjusting device for a gas cooker main gas pipe (1) and a gas cooker with the device are provided. The position adjusting device for a gas cooker main gas pipe (1) of the present invention includes a driving part (5) and an execution part (4). The driving part (5) is connected to the execution part (4), and the execution part is connected to the main gas pipe (1). The driving part (5) is used for generating a driving force, and transferring the driving force to the execution part (4). The execution part (4) is used for receiving the driving force transferred from the driving part (5), and further transferring the driving force to the main gas pipe (1), so that the main gas pipe is displaced. The main gas pipe is disposed in a bottom case (2) of the gas cooker, a valve is connected and fixed to the main gas pipe, and the valve includes a solenoid valve and a knob shaft (3). Thus, the position of the gas cooker main gas pipe (1) can be adjusted conveniently, and the position of the knob shaft (3) can be further adjusted, so that the position of the knob shaft corresponds to the position of a corresponding hole on a panel, thereby improving assembling efficiency.

## Description

### BACKGROUND OF THE INVENTION

### Field of the Invention

The present invention relates to the field of gas cookers, and more particularly, to the field of position correction of a gas cooker main gas pipe, and even more particularly to a position adjusting device according to the preamble of claim 1.

### Related Art

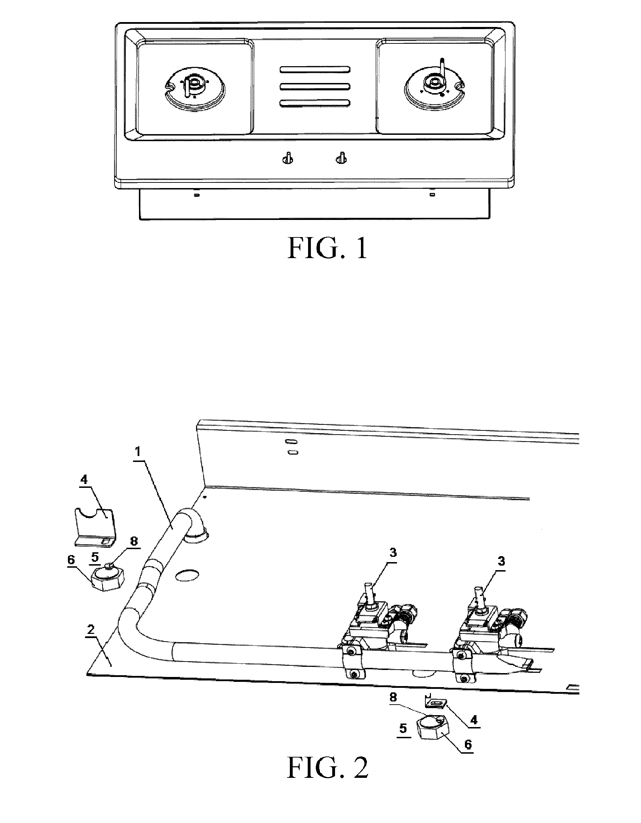

In the current gas cooker assembly, there has been a technical problem to be solved: when a bottom case and a panel are assembled together, due to a variety of reasons, the position of the knob shaft disposed on the bottom case sometimes does not correspond to the position of a corresponding hole on the panel, which influences the normal assembly. Once the situation occurs, the assembly efficiency is seriously influenced, and the manufacturing costs are increased to a certain degree. In normal cases, the assembly effect between the bottom case and the panel is shown in FIG. 1.

Unless supported by sufficient evidences, the prior art described herein does not mean that it is known to those of ordinary skill in the art before the filing date of this application.

### DISCLOSURE OF THE PRESENT INVENTION: PROBLEM, SOLUTION, ADVANTAGES

In order to solve the technical problem that the assembly is influenced because the positions of a knob shaft and a corresponding hole on the panel are easily misplaced, the present invention is directed to a position adjusting device for a gas cooker main gas pipe and a gas cooker disposed with the device.

The object of the present invention is achieved by a position adjusting device comprising the features of claim 1 as well as by a gas cooker comprising the features of claim 15. Advantageous embodiments and expedient improvements of the present invention are disclosed in the respective dependent claims.

The present invention provides a position adjusting device for a gas cooker main gas pipe, which includes a driving part and an execution part. The driving part is connected to the execution part, and the execution part is connected to the main gas pipe. The driving part is used for generating a driving force and transferring the driving force to the execution part. The execution part is used for receiving the driving force transferred from the driving part and further transferring the driving force to the main gas pipe, so that the main gas pipe is displaced. The main gas pipe is disposed in a bottom case of the gas cooker, a valve is fixed and connected to the main gas pipe, and the valve includes a solenoid valve and a knob shaft. Thus, the position of the gas cooker main gas pipe can be adjusted conveniently, and the position of the knob shaft can be further adjusted, so that the position of the knob shaft corresponds to the position of a corresponding hole on the panel, thereby improving the assembling efficiency and reducing the manufacturing costs.

Optionally, the driving part includes a control part, a fixing part and a connecting part. The control part is disposed under the bottom case of the gas cooker, and a driving force is generated when the control part is manually operated. The fixing part is disposed on the bottom case of the gas cooker, and under the action of the driving force transferred from the control part, the fixing part rotates relative to the bottom case. The connecting part is connected to the execution part, and when the fixing part rotates relative to the bottom case, the position of the connecting part changes, so that the execution part obtains the driving force. Thus, the position of the gas cooker main gas pipe position is adjusted by simple mechanical operations, so the cost is low and the efficiency is high.

Optionally, the fixing part has a cylindrical structure as a whole. The connecting part is disposed at an edge of an upper bottom surface of the fixing part. Thus, the costs are further reduced, and the efficiency is ensured.

Optionally, the fixing part has a cylindrical structure as a whole. The connecting part is connected to the upper bottom surface of the fixing part via a middle component.

Optionally, the fixing part is correspondingly fixed above the bottom case of the gas cooker through thread connection. Thus, the driving part and the execution part together fix the main gas pipe.

Optionally, the fixing part has a cylindrical structure as a whole. A round hole is disposed on the bottom case of the gas cooker, and the fixing part passes through the round hole. The diameter of the bottom surface of the fixing part is less than the diameter of the round hole. A block part is disposed on a top end of the fixing part, and the block part is fastened on the bottom case of the gas cooker. Thus, the costs are further reduced while the function of adjusting the position of the gas cooker main gas pipe is achieved.

Optionally, a hole is disposed on the execution part. The connecting part passes through the hole and is further connected to the execution part, and the connecting part can rotate in the hole.

Optionally, a stop part is disposed on the top end of the connecting part, and the stop part is fastened on the hole of the execution part.

Optionally, the execution part and the main gas pipe are fixed together through screw connection, rivet connection, welding, integral forming or adhering.

Optionally, a notch is disposed on the execution part, and the main gas pipe is positioned on the notch.

Optionally, a through hole is disposed on the execution part, the main gas pipe passes through the through hole, and the main gas pipe can move in a direction passing through the through hole.

Optionally, the main gas pipe has a substantially L-shaped structure, and a driving part and an execution part are disposed on each edge of the main gas pipe respectively.

Optionally, the main gas pipe has a substantially L-shaped structure, and a driving part and a corresponding execution part are disposed on one edge of the main gas pipe, while two driving parts and two corresponding execution parts are disposed on the other edge. As the two driving parts and two corresponding execution parts are disposed on one edge of the main gas pipe, the main gas pipe is fixed, and the accuracy of the moving direction of the main gas pipe is improved.

Optionally, the control part has a prismatic structure as a whole.

Optionally, an opening cavity is disposed on the control part, and the opening cavity has a prismatic structure.

Optionally, the driving part includes a control part and a connecting part. The control part is disposed under the bottom case of the gas cooker, and a driving force is generated when the control part is manually operated. The connecting part is connected to the execution part, and when the connecting part receives the driving force transferred from the control part, the position of the connecting part changes, so that the execution part obtains the driving force.

Optionally, transmission teeth are disposed on the execution part in a direction perpendicular to the main gas pipe. The connecting part includes a gear, and the gear is engaged with the transmission teeth. Thus, the accuracy of the moving direction of the main gas pipe is improved.

Optionally, the driving part includes a manipulation unit and a driving force generating unit. The manipulation unit is used for sending an operation instruction to the driving force generating unit. The operation instruction includes a driving force magnitude instruction and/or a driving force direction instruction. The driving force generating unit is used for generating a driving force after receiving the operation instruction sent by the manipulation unit. Thus, intelligent adjustments of the position of the gas cooker main gas pipe can be achieved.

The present invention further provides a gas cooker, which includes a panel, a bottom case and a main gas pipe disposed in the bottom case. A valve is connected and fixed to the main gas pipe, and the valve includes a solenoid valve and a knob shaft. A position adjusting device for a main gas pipe according to the foregoing description is further disposed on the gas cooker. Thus, the position of the gas cooker main gas pipe can be adjusted conveniently, and the position of the knob shaft can be further adjusted, so that the position of the knob shaft corresponds to the position of a corresponding hole on the panel, thereby improving the assembling efficiency and reducing the manufacturing costs.

### BRIEF DESCRIPTION OF THE DRAWINGS

The accompany drawings below are merely intended to provide an illustrative description and explanation of the present invention and are not to limit the scope of the present invention. In the drawings:
FIG. 1 is a schematic structure diagram of a current gas cooker before a knob and a burner are disposed;
FIG. 2 is an exploded structural view of a position adjusting device for a gas cooker main gas pipe of Embodiment 1 of the present invention;
FIG. 3 is a schematic structural view of a driving part of the position adjusting device for a gas cooker main gas pipe of Embodiment 1 of the present invention;
FIG. 4 is a schematic view of a cooperation relation between the driving part and an execution part of the position adjusting device for a gas cooker main gas pipe of Embodiment 1 of the present invention;
FIG. 5 is a schematic structural view of a driving part of a position adjusting device for a gas cooker main gas pipe of Embodiment 2 of the present invention;
FIG. 6 is another schematic structural view of the driving part of the position adjusting device for a gas cooker main gas pipe of Embodiment 2 of the present invention;
FIG. 7 is a cross-sectional view along a line A-A in FIG. 6; and
FIG. 8 is a schematic view of a cooperation relation between a driving part and an execution part of a position adjusting device for a gas cooker main gas pipe of Embodiment 3 of the present invention.

Illustration of the reference signs in the drawings:
1- main gas pipe, 2- bottom case, 3- knob shaft, 4- execution part, 5- driving part, 6-control part, 7- fixing part, 8- connecting part, 9- stop part, 10- opening cavity, 11-transmission teeth, and 12- gear.

### DETAILED DESCRIPTION OF THE INVENTION

In order to make the objectives, solutions and beneficial effects of the present invention more comprehensible, the present invention is described further below with reference to the accompanying drawings and preferred embodiments. It should be first described that the gas cooker in the present invention shall be expansively understood as any cooker disposed with a burner, and the specific gas source type is not limited, which may be natural gas, manufactured gas, liquefied petroleum gas, marsh gas and any other gas sources that may be used alike.

### Embodiment 1

The present invention provides an embodiment of a position adjusting device for a gas cooker main gas pipe 1, as shown in FIGs. 2-4. In the position adjusting device for the gas cooker main gas pipe 1, the adjusted main gas pipe 1 is disposed in a bottom case 2 of the gas cooker, a valve is connected and fixed to the main gas pipe 1, and the valve includes a solenoid valve and a knob shaft 3.

The position adjusting device for the gas cooker main gas pipe 1 includes a driving part 5 and an execution part 4. The driving part 5 is connected to the execution part 4, and the execution part 4 is connected to the main gas pipe 1. The driving part 5 is used for generating a driving force, and transferring the driving force to the execution part 4. The execution part 4 is used for receiving the driving force transferred from the driving part 5, and further transferring the driving force to the main gas pipe 1, so that the main gas pipe is displaced 1.

The driving part 5 includes a control part 6 and a connecting part 8, and the control part 6 and the connecting part 8 are integrally formed. The control part 6 is disposed under the bottom case 2 of the gas cooker, the control part 6 has a prismatic structure as a whole, and a driving force is generated when the control part 6 is manually operated. According to this embodiment, "manual operation" refers to rotation operation performed on the control part 6 through a tool such as a wrench or pliers. The connecting part 8 passes through a through hole on the bottom case 2, and enters the bottom case 2. Due to the structure of the control part, the control part 6 cannot pass through the through hole, but is located under the bottom case 2, which facilitates implementation of the "manual operation".

The connecting part 8 is disposed at an edge of the control part 6. The connecting part 8 is connected to the execution part 4, when the connecting part 8 receives the driving force transferred from the control part 6 (that is, when the control part 6 rotates), the position of the connecting part 8 changes, so that the execution part 4 moves, the execution part 4 obtains the driving force, and further drives the main gas pipe 1 to move.

The main gas pipe 1 has a substantially L-shaped structure, and a driving part 5 and a corresponding execution part 4 are disposed on two edges (that is, the two edges that form the L-shaped structure) of the main gas pipe 1 respectively.

The execution part 4 adopts a laminated structure, and the execution part 4 is an L-shaped structure consisting of two laminates as a whole. A notch is disposed on one laminate, the main gas pipe 1 is positioned on the notch, and the main gas pipe 1 can move in a direction passing through the notch. A hole is disposed on the other laminate, the connecting part 8 passes through the hole and is further connected to the execution part 4, and the connecting part 8 can rotate in the hole. A stop part 9 is disposed on a top end of the connecting part 8, and the stop part 9 is fastened on the hole, so that the driving part 5 and the execution part 4 are fixed together. As the execution part 4 adopts the structural design of the notch and the hole, the execution part 4 can transform the driving force from the driving part 5 into a force substantially perpendicular to the edge of the main gas pipe 1 connected to the execution part 4, so as to drive the edge of the main gas pipe 1 to move.

Through the position adjusting device, the position of the main gas pipe 1 can be adjusted, and the position of the knob shaft 3 can be further adjusted, so that the position of the knob shaft 3 completely corresponds to the position of a corresponding hole on the panel. After the position of the main gas pipe 1 is adjusted, the valve and a burner head are connected and fixed together via a gas guide pipe, and at the same time, the main gas pipe 1 is fixed to the through hole of the bottom case 2 through which the main gas pipe 1 passes, so as to the main gas pipe 1 is fixed. Definitely, the fixing manner of the main gas pipe 1 is merely a preferable manner adopted by this embodiment, and other fixing manners may also be used in actual operations. It should be noted that, in order to ensure the position adjusting device to realize the function, the diameter of the through hole of the bottom case 2, through which the main gas pipe 1 passes, is greater than the diameter of the main gas pipe 1. According to this embodiment, the diameter of the through hole is two times the diameter of the main gas pipe 1.

After other components are further installed, the bottom case 2 and the panel can be assembled together, the knob shaft 3 passes through the corresponding hole on the panel, as shown in FIG. 1. Furthermore, the knob is fitted on the knob shaft 3, and finally, the assembly is accomplished.

The abovementioned is a preferred embodiment of the present invention, and other embodiments may be obtained through modifications and replacements of certain technical features. For example, the execution part and the main gas pipe are fixed together through screw connection, rivet connection, welding, integral forming or adhering. Further, for example, a through hole is disposed on the execution part, the main gas pipe passes through the through hole, and the main gas pipe can move in a direction passing through the through hole. Further, for example, the main gas pipe has a substantially L-shaped structure, and a driving part and a corresponding execution part are disposed on one edge of the main gas pipe, while two driving parts and two corresponding execution parts are disposed on the other edge. Further, for example, the main gas pipe has a substantially L-shaped structure, and two driving parts and two corresponding execution parts are disposed on two edges of the main gas pipe respectively. Further, for example, a hole is disposed on the connecting part, the execution part passes through the hole and is further connected to the connecting part, and the execution part can rotate in the hole. Further, for example, the driving part includes a manipulation unit and a driving force generating unit; the manipulation unit is used for sending an operation instruction to the driving force generating unit; the operation instruction includes a driving force magnitude instruction and/or a driving force direction instruction; and the driving force generating unit is used for generating a driving force after receiving the operation instruction sent by the manipulation unit.

### Embodiment 2

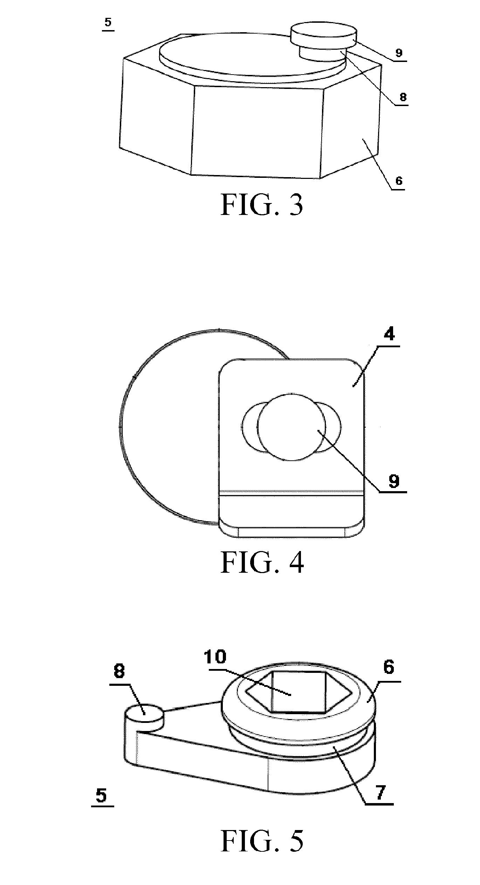

The present invention provides an embodiment of another position adjusting device for a gas cooker main gas pipe 1, as shown in FIGs. 5-7. The main difference between this embodiment and Embodiment 1 lies in that the specific structures of the driving part 5 are different.

A driving part 5 includes a control part 6, a fixing part 7 and a connecting part 8, and the control part 6, the fixing part 7 and the connecting part 8 are integrally formed.

The control part 6 is disposed under the bottom case of the gas cooker, and a driving force is generated when the control part 6 is manually operated. An opening cavity 10 is disposed on the control part 6, and the opening cavity 10 has a prismatic structure. The opening cavity 10 is used for inserting a tool matching the structure, so that a rotation operation can be performed to generate a driving force.

The fixing part 7 is disposed on the bottom case of the gas cooker, and under the action of the driving force transferred from the control part 6, the fixing part 7 rotates relative to the bottom case. The fixing part 7 has a cylindrical structure as a whole.

The connecting part 8 is connected to the execution part, and when the fixing part 7 rotates relative to the bottom case, the position of the connecting part 8 changes, so that the execution part obtains the driving force. The connecting part 8 is connected to an upper bottom surface of the fixing part 7 via a middle component. The "upper bottom surface of the fixing part 7" refers to a bottom surface at an upper end of the fixing part 7 in a use state. FIG. 5 merely shows a schematic structural view, but not a schematic view of the use state.

A round hole is disposed on the bottom case of the gas cooker, and the fixing part 7 passes through the round hole. The diameter of the bottom surface of the fixing part 7 is less than the diameter of the round hole.

The abovementioned is a preferred embodiment of the present invention, and other embodiments may be obtained through modifications and replacements of certain technical features. For example, the connecting part is directly disposed at an edge of the upper bottom surface of the fixing part, and at the same time, a block part is disposed on a top end of the fixing part, and the block part is fastened on the bottom case of the gas cooker. Further, for example, the fixing part is correspondingly fixed above the bottom case of the gas cooker through thread connection.

### Embodiment 3

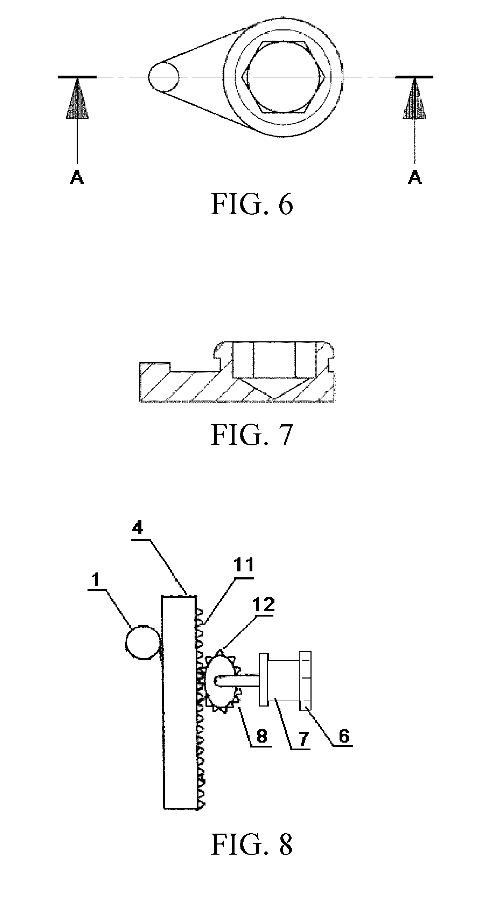

The present invention provides an embodiment of another position adjusting device for a gas cooker main gas pipe 1, as shown in FIG. 8. This embodiment is a further improvement on the base of embodiment 2. The position adjusting device for a gas cooker main gas pipe 1 includes a driving part and an execution part 4, the driving part is connected to the execution part 4, and the execution part 4 and the main gas pipe 1 are fixed together through welding or adhering.

As shown FIG. 8, the driving part includes a control part 6, a fixing part 7 and a connecting part 8.

The execution part 4 has a rectangular structure as a whole, and transmission teeth 11 are disposed on the execution part 4 in a direction perpendicular to the main gas pipe 1. Herein, "the direction perpendicular to the main gas pipe 1" refers to a direction perpendicular to an extending direction of the edge of the main gas pipe 1 connected to the execution part 4. The connecting part 8 includes a gear 12, and the gear 12 is engaged with the transmission teeth 11 of the execution part 4. It should be noted that, FIG. 8 is merely a schematic view, and may be different from the actual structure, and when the structure shown in FIG. 8 is different from the text description, it is subject to the text description. When the control part 6 rotates, the fixing part 7 disposed on the gas cooker bottom case rotates relative to the bottom case, and the gear 12 on the connecting part 8 is driven to rotate. The rotation of the gear 12 further drives the transmission teeth 11 of the execution part 4 to move, so that the main gas pipe 1 moves in the direction perpendicular to the extending direction. The main gas pipe 1 used in the present invention is a substantially L-shaped structure, and driving parts and execution parts 4 are disposed on two edges of the main gas pipe 1 respectively, where the driving part and the execution part 4 on one edge control the main gas pipe 1 to move in two directions of front and back, and the driving part and the execution part 4 on the other edge control the main gas pipe 1 to move in two directions of left and right, so that the main gas pipe 1 can move in four directions of front, back, left and right, and full range of position adjustment can be achieved.

### Embodiment 4

The present invention further provides an embodiment of a gas cooker, which includes a panel, a bottom case and a main gas pipe disposed in the bottom case. A valve is connected and fixed to the main gas pipe, and the valve includes a solenoid valve and a knob shaft. A hole corresponding to the position of the knob shaft is disposed on the panel, and a position adjusting device for a main gas pipe according to the foregoing description is further disposed in the gas cooker.

It should be noted that, the present invention is not limited to the above embodiments, but covers all the possible implementations determined according to the claims and the disclosure of the specification. Therefore, any simple modification, equivalent replacement, or improvement made without departing from the spirit and principle of the present invention shall fall within the protection scope of the present invention.

## Claims

1. A position adjusting device for a gas cooker main gas pipe (1), wherein the main gas pipe (1) is disposed in a bottom case (2) of the gas cooker, a valve is connected and fixed to the main gas pipe (1), and the valve comprises a solenoid valve and a knob shaft (3), **characterized by**:
comprising a driving part and an execution part (4), wherein the driving part is connected to the execution part (4), and the execution part (4) is connected to the main gas pipe (1);
the driving part is used for generating a driving force, and transferring the driving force to the execution part (4); and
the execution part (4) is used for receiving the driving force transferred from the driving part, and further transferring the driving force to the main gas pipe (1), so that the main gas pipe (1) is displaced.

2. The position adjusting device according to claim 1, **characterized in that**,
the driving part comprises a control part (6), a fixing part (7) and a connecting part (8);
the control part (6) is disposed under the bottom case (2)of the gas cooker, and a driving force is generated when the control part (6) is manually operated;
the fixing part (7) is disposed on the bottom case (2) of the gas cooker, and under the action of the driving force transferred from the control part (6), the fixing part (7) rotates relative to the bottom case (2); and
the connecting part (8) is connected to the execution part (4), and when the fixing part (7) rotates relative to the bottom case (2), the position of the connecting part (8) changes, so that the execution part (4) obtains the driving force.

3. The position adjusting device according to claim 2, **characterized in that**,
the fixing part (7) has a cylindrical structure as a whole; and
the connecting part (8) is disposed at an edge of an upper bottom surface of the fixing part (7).

4. The position adjusting device according to claim 2 or 3, **characterized in that**,
the fixing part (7) has a cylindrical structure as a whole; and
the connecting part (8) is connected to an upper bottom surface of the fixing part (7) via a middle component.

5. The position adjusting device according to at least one of claims 2 to 4, **characterized in that**,
the fixing part (7) is correspondingly fixed on the bottom case (2) of the gas cooker through thread connection.

6. The position adjusting device according to at least one of claims 2 to 5, **characterized in that**,
the fixing part (7) has a cylindrical structure as a whole;
a round hole is disposed on the bottom case (2) of the gas cooker, and the fixing part (7) passes through the round hole;
the diameter of the bottom surface of the fixing part (7) is less than the diameter of the round hole; and
a block part is disposed on a top end of the fixing part (7), and the block part is fastened on the bottom case (2) of the gas cooker.

7. The position adjusting device according to at least one of claims 2 to 6, **characterized in that**,
a hole is disposed on the execution part (4); and
the connecting part (8) passes through the hole and is further connected to the execution part (4), and the connecting part (8) is capable of rotating in the hole.

8. The position adjusting device according to claim 7, **characterized in that**,
a stop part (9) is disposed on a top end of the connecting part (8), and the stop part (9) is fastened on the hole of the execution part (4).

9. The position adjusting device according to at least one of claims 1 to 8, **characterized in that**,
a notch is disposed on the execution part (4), and the main gas pipe (1) is positioned on the notch.

10. The position adjusting device according to claim at least one of claims 1 to 9, **characterized in that**,
a through hole is disposed on the execution part (4), the main gas pipe (1) passes through the through hole, and the main gas pipe (1)is capable of moving in a direction passing through the through hole..

11. The position adjusting device according to at least one of claims 1 to 10, **characterized in that**,
the main gas pipe (1) has a substantially L-shaped structure, and a driving part and a corresponding execution part (4) are disposed on one edge of the main gas pipe (1), while two driving parts and two corresponding execution parts (4) are disposed on the other edge.

12. The position adjusting device according to at least one of claims 1 to 11, **characterized in that**,
the driving part comprises a control part (6) and a connecting part (8);
the control part (6) is disposed under the bottom case (2) of the gas cooker, and a driving force is generated when the control part (6) is manually operated; and
the connecting part (8) is connected to the execution part (4), and when the connecting part (8) receives the driving force transferred from the control part (6), the position of the connecting part (8) changes, so that the execution part (4) obtains the driving force.

13. The position adjusting device according to at least one of claims 2 to 12, **characterized in that**,
transmission teeth (11) are disposed on the execution part (4) in a direction perpendicular to the main gas pipe (2); and
the connecting part (8) comprises a gear (12), and the gear (12) is engaged with the transmission teeth (11).

14. The position adjusting device according to at least one of claims 1 to 13, **characterized in that**,
the driving part comprises a manipulation unit and a driving force generating unit;
the manipulation unit is used for sending an operation instruction to the driving force generating unit;
the operation instruction comprises a driving force magnitude instruction and/or a driving force direction instruction; and
the driving force generating unit is used for generating a driving force after receiving the operation instruction sent by the manipulation unit.

15. A gas cooker, comprising a panel, a bottom case (2) and a main gas pipe (1) disposed in the bottom case (2), wherein a valve is connected and fixed to the main gas pipe (1), the valve comprises a solenoid valve and a knob shaft (3), and a position adjusting device for a main gas pipe (1) according to any one of claims 1 to 14 is further disposed on the gas cooker.
